# EUROPEAN PATENT APPLICATION

(11) **EP 0 687 922 A2**
(43) Date of publication of application: **20.12.1995**
(21) Application number: 95303923.7
(22) Date of filing: 07.06.1995
(51) Int. Cl.: G01S 3/786, H04N 5/232

(54) **Apparatus for automatically tracking an image of an object for a video camera**

(30) Priority: 17.06.1994 JP 135623/94
(71) Applicant: MATSUSHITA ELECTRIC INDUSTRIAL CO., LTD., Kadoma-shi, Osaka-fu 571 (JP)
(72) Inventor: Ito, Asanobu, Yawata-Shi, Kyoto-fu 614 (JP); Toyomura, Koichi, Katano-shi, Osaka-fu, 576 (JP); Ishiguro, Keizo, Katano-shi, Osaka-fu, 576 (JP); Yamane, Yosuke, Katano-shi, Osaka-fu, 576 (JP)
(74) Representative: Crawford, Andrew Birkby

(57) **Abstract**

An automatic tracking apparatus usable in a video camera or an automatic focus adjusting system of the video camera has a tracking signal detecting unit for detecting a tracking signal representing a feature of an image of an object from a scanning line of a video signal within a predetermined tracking area, and for detecting a movement of the image of the object from a movement of a position of the tracking signal. The tracking signal detecting unit detects plural tracking signals from plural scanning lines, respectively, in each field of the video signal, and detects the movement of the image of the object from interfields movements of positions of the plural tracking signals in the respective plural scanning lines. A tracking control unit is responsive to the detected movement of the image of the object for changing a position of the tracking area. It is preferable to use only interfields movements of positions of tracking signals whose interfield moving amounts are within a predetermined range.

## Description

### BACKGROUND OF THE INVENTION

### 1. Field of the Invention

The present invention relates to a video camera having an automatic focus adjusting function and an automatic image tracking function.

### 2. Description of the Prior Art

As an automatic focus adjusting apparatus used in various cameras such as video cameras and still cameras, various systems have been proposed, including a range-finding system using an infrared ray and a phase difference detecting system. A system mainly used in the video cameras is a video signal system which performs focus adjusting by using changes in a luminance signal (contrast) of a video signal as disclosed, for example, in U. S. Patent No. 4,975,726. In this system, it is generally assumed that an image of an intended object is located in the middle of a screen, and automatic focus adjusting is performed by using changes in the luminance signal within a focus detection area defined in the middle of the screen. Accordingly, when the image of the intended object moves out of the focus adjusting area, or to a peripheral area of the screen, it is impossible to correctly control the automatic focus adjusting. Some solutions for this problem have been proposed as disclosed in Japanese Laid-Open Patent Application No. 3-38976 and U. S. Patent No. 4,872,058. However, the proposed solutions are not sufficient from a view point of tracking precision.

### SUMMARY OF THE INVENTION

It is hence a primary object of the present invention to stabilize operation of functions of a video camera including the automatic focus adjusting function by precisely tracking the focus adjusting area.

To achieve this object, an automatic tracking apparatus according to the present invention comprising: an image taking lens for forming an image of an object; an image pickup element for converting the image formed by the image taking lens to an electrical signal; a signal processing circuit for processing the electrical signal output from the image pickup element to obtain a video signal; a tracking signal detecting means for detecting a tracking signal representing a feature of the image of the object from a scanning line of the video signal within a predetermined tracking area, and for detecting a movement of the image of the object from a movement of a position of the tracking signal, wherein said tracking signal detecting means detects at least two tracking signals from at least two scanning lines, respectively, in each field of the video signal, and detects the movement of the image of the object from interfields movements of positions of said at least two tracking signals in the respective at least two scanning lines; and a tracking control part responsive to the detected movement of the image of the object for changing a position of the tracking area.

An automatic focus adjusting apparatus according to the present invention comprising: an image taking lens for forming an image of an object, said image taking lens including therein a focus adjusting lens movable to change a focusing state of the image; an image pickup element for converting the image formed by the image taking lens to an electrical signal; a signal processing circuit for processing the electrical signal output from the image pickup element to obtain a video signal; a focus detecting means for detecting a focusing state of the image of the object from the video signal within a predetermined tracking area and for producing a focus signal indicative of the detected focusing state; a focus control means responsive to the focus signal for driving said focus adjusting lens to control the focusing state of the image of the object within said tracking area; a tracking signal detecting means for detecting a tracking signal representing a feature of the image of the object from a scanning line of the video signal within said predetermined tracking area, and for detecting a movement of the image of the object from a movement of a position of the tracking signal, wherein said tracking signal detecting means detects at least two tracking signals from at least two scanning lines, respectively, in each field of the video signal, and detects the movement of the image of the object from interfields movements of positions of said at least two tracking signals in the respective at least two scanning lines; and a tracking control part responsive to the detected movement of the image of the object for changing a position of the tracking area.

In a preferable manner, the tracking signal detecting means detects as the tracking signal a peak value of a high frequency component of the video signal on a scanning line within the tracking area.

Preferably, the tracking signal detecting means may detect the movement of the image of the object from only interfields movements of positions of at least two tracking signals whose interfield moving amounts are within a predetermined range. Preferably, the tracking signal detecting means may calculate an average value of the interfields movements of positions of at least two tracking signals either with or without the condition that the interfield moving amounts are within the predetermined range.

### BRIEF DESCRIPTION OF THE DRAWINGS

Fig. 1 is a block diagram of an automatic focus adjusting apparatus in a first embodiment of the present invention.

Fig. 2 is a block diagram of a peak detection circuit 109 shown in Fig. 1.

Fig. 3 is an explanatory diagram of automatic tracking in the first embodiment of the present invention.

Fig. 4 is a block diagram of an automatic tracking apparatus in a second embodiment of the present invention.

Fig. 5 is a block diagram of a peak detection circuit 206 shown in Fig. 4.

### DESCRIPTION OF THE PREFERRED EMBODIMENTS

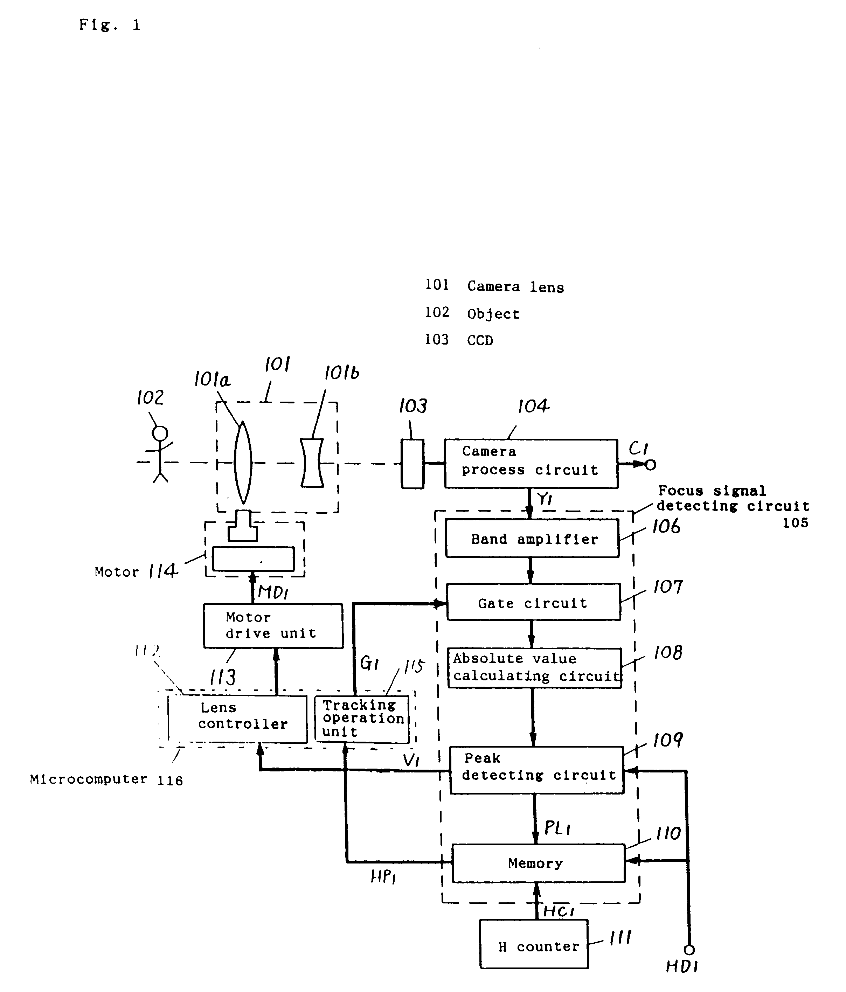

Fig. 1 shows a block diagram of an automatic focus adjusting apparatus in a first embodiment of the present invention. Referring to Fig. 1, an image taking lens (camera lens) 101 is constructed by two lens groups 101a and 101b. Each of the lens groups is illustrated as a single lens for simplifying the illustration, but actually is constructed by a combination of a plurality of convex and concave lenses. The image taking lens 101 forms an optical image of an object 102 on a image sensing surface of a charge coupled device (CCD) 103. The CCD 103 converts the optical image into an electical signal. The electrical signal output from the CCD 103 is processed in a camera process circuit 104 in a known manner so as to be converted to a specific video signal C1 such, for example, as the NTSC televisio signal. Further, the camera process circuit 104 extracts a luminance signal Y1 from the video signal C1.

A focus signal detection circuit 105 extracts a high frequency component having a frequency higher than a specific frequency from the liminance signal Y1 on each scanning line in a focus detection area which is set in an initial state at the middle of the screen (finder screen), and calculates a focus signal V1 corresponding to a focusing state of the image taking lens 101 at field intervals in a known manner. Also, the focus signal detection circuit 105 detects a position at which the high frequency component has a peak level on each scanning line. The focus signal detection circuit 105 comprises a band amplifier 106 for extracting frequency components in a specific frequency range, a gate circuit 107 for passing only a high frequency component within the focus detection area, an absolute value circuit 108 for calculating an absolute value of a level of the high frequency component, a peak detection circuit 109 for detecting a peak level of the high frequency component and outputting the focus signal V1, and a memory 110 for storing therein a position at which the high frequecy component has the peak level. A count output HCl from a horizontal address counter 111 for counting a horizontal address is connected to a data input of the memory 110, and is held in the memory 110 in response to a latch pulse PL1 from the peak detection circuit 109. The peak detection circuit 109 is reset by a horizontal synchronizing signal HD1, and an address of the memory 110 is incremented by the horizontal synchronizing signal HD1.

A lens control unit 112 calculates an interfield difference ΔV of the focus signal V1, or a difference between the values of the focus signals of two fields, and determines a focusing state of the image taking lens 101 based on the sign and absolute value of the focus signal difference ΔV and the absolute value of the focus signals V1. Based on the determined focusing state, the lens control circuit 112 outputs a control signal M1 specifying a driving speed and a driving direction of a motor 114 for moving the lens 101. A motor drive unit 112 receives the control signal M1, and, according to the driving speed and the driving direction indicated by the control signal, outputs a motor drive signal MD1 to the motor 114 to move the lens to a specified position to thereby performs automatic focus adjusting.

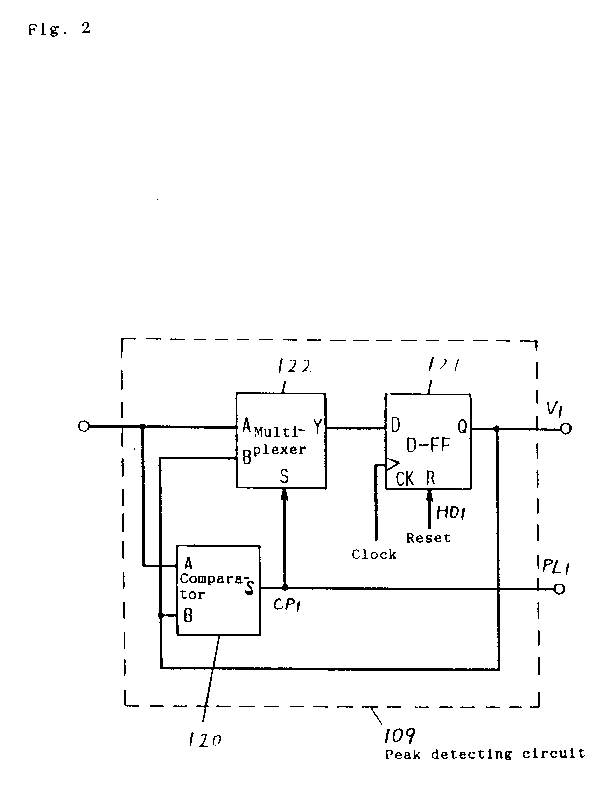

The peak detection circuit 109 detects a maximum value of the high frequency component of the luminance signal Y1. Fig. 2 shows an example of an internal construction of the peak detection circuit 109. A comparator 120 compares an input signal of the peak detection circuit and an output signal of a D-flip-flop (D-FF) 121, and outputs a signal CP1 indicating the comparison result. A multiplexer 122 is responsive to the output signal CP1 of the comparator 120 for outputting a greater one of the input signal of the peak detection circuit and the output signal of the D-FF 121. The output signal of the multiplexer becomes an input signal of the D-FF 121, and the output of the D-FF 121 is renewed to a maximum value in response to the next clock. This maximum value detection is carried out during a time period from a reset timing of the D-FF 121 to the next reset timing of the D-FF 121. Here, since the reset is performed by the horizontal synchronizing signal HD1, a maximum value is obtained at horizontal scanning intervals. The output signal CP1 of the comparator 120 is sent also, as the latch pulse PL1, to the memory 110, so that the memory 110 stores therein, as a peak position, a count value of the horizontal address counter 111 at the time when the maximum value of the high frequency component is obtained.

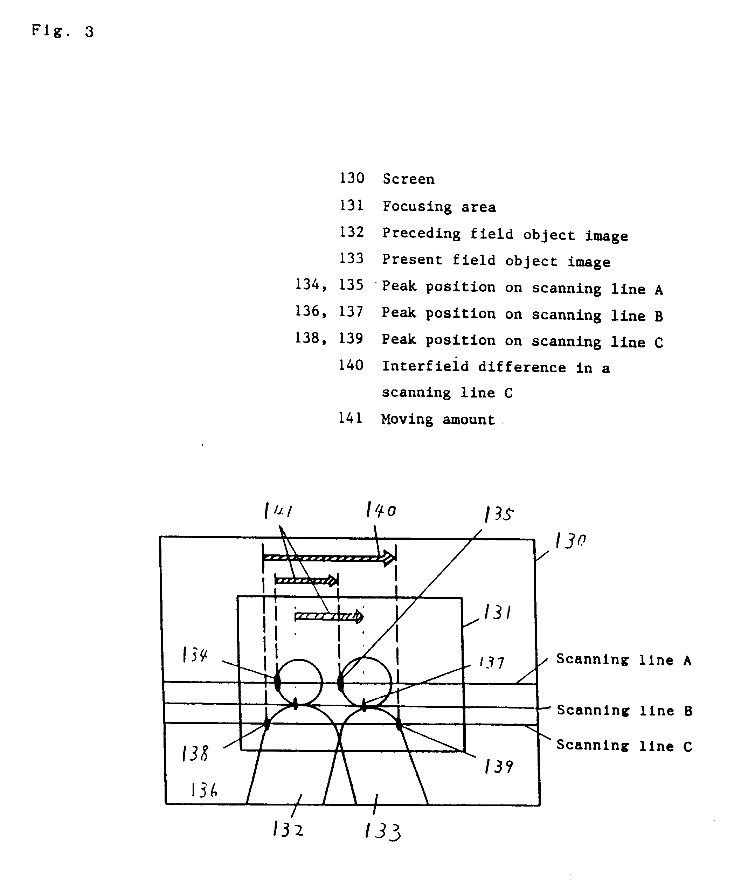

A tracking operation unit 115 reads the peak positions HP1 on each of the scanning lines in the focus detection area, and calculates the interfield difference of the peak position with respect to each scanning line, i.e., the difference between a peak position on a scanning line in a current field and a peak position on the corresponding scanning line in the previous field. Fig. 3 shows a state in which peak positions are detected in a certain field image. In a focus detection area 131 set in an image screen 130, an image 133 is an image of an object in the current field and an image 132 is an image of the object in the previous field. Although the focus signal detection circuit 105 detects a peak position on every scanning line, there is a case that the detected peak positions on a scanning line are not the same portion of the image of the object in the current and previous fields. That is, the peak positions 134 and 135 on the scanning line A are a same portion of the image of the object, and the peak positions 136 and 137 on the scanning line B are another same portion of the image of the object, but the peak positions 138 and 139 on the scanning line C are different portions of the image of the object. Accordingly, the interfield difference 140 detected on the scanning line C is largely different from the actual moving amount 141 of the image of the object. Considering this problem and the fact that the moving amount of the image of the object between two consecutive fields is generally relatively small compared with the area of the focus detection area, the moving amount of the image of the object may be estimated as an average value of detected peak position interfield differences which are within a predetermined range. In the case shown in Fig. 3, for example, the moving amount of the image of the object may be determined as an average value of the interfield differences on the scanning lines A and B, or the interfield difference on the scanning line C may be excluded from the calculation of the average value. The tracking operation unit 115 outputs to a gate circuit 107 a moving instruction signal G1 for moving the focus detection area 131 by an amount corresponding to the detected moving amount of the image of the object.

By the processing as described above, it is possible to make the focus detection area follow the movement of the object and thus is possible to realize an accurate automatic focus adjustment.

The lens control unit 112 and the tracking operation unit 115 may be realized by a microcomputer 116. In the above embodiment, the moving amount of the image of the object is obtained by calculating an average value of the detected interfield differences of the peak values on a plurality of scanning lines, but the moving amount of the image of the object may be determined as a center value or a minimum value of the detected interfield differences of the peak values on the plurality of scanning lines.

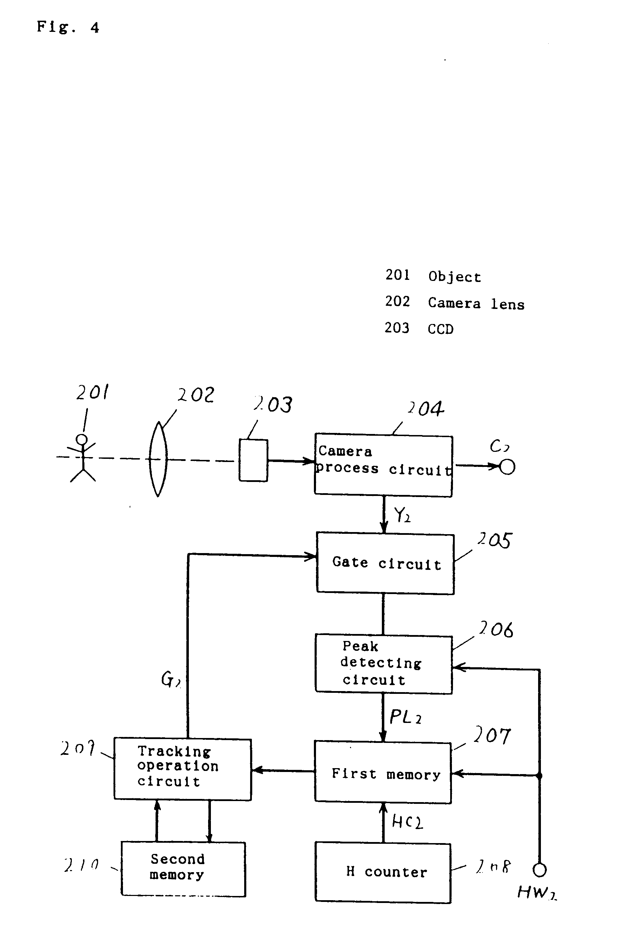

Fig. 4 shows a block diagram of an automatic tracking apparatus in a second embodiment of the present invention. An optical image of an object 201 is formed on a sensing surface of a charge coupled device (CCD) 203 through an image taking lens (camera lens) 202. The optical image is converted by the CCD 203 to an electrical signal, and then subjected to a known signal processing in a video signal processing circuit (camera process circuit) 204 to be converted to a specific video signal (for example, an NTSC television signal) C2. The video signal processing circuit 204 also extracts a luminance signal Y2 from the video signal.

A gate circuit 205 extracts only a part of the luminance signal Y1 which part exists in a tracking area originally set at the middle of the screen. A peak detection circuit 206 detects a peak value of the luminance signal on each of a plurality of scanning lines which are selected at intervals of at least two scanning lines in each field. A count value of a horizontal address counter 208 which counts the horizontal address enters a first memory 207 and is stored in the first memory 207 at the current storage address thereof in response to a latch pulse PL2 output from the peak detection circuit 206. A frequency divided signal HW2 obtained by frequency dividing a horizontal synchronizing signal HD2 is applied to the peak detection circuit 206 to reset the peak detection circuit 206, and to the first memory 207 to increment the storage address of the first memory 207.

A tracking operation circuit 209 calculates an interfield difference of peak positions on the respective scanning line, i.e., a difference between a peak position on a scanning line in a current field and a peak position on the same scanning line in a previous field. and then calculates an average value of the calculated interfield differences as a moving amount of the image of the object. A second memory 210 has stored therein a moving amount of the image of the object detected in the previous field. The tracking operation circuit 209 outputs to the gate circuit 205 a gate cotrol signal G2 for moving the tracking area according to an average value of the moving amount of the image of the object detected in the current field and the moving amount of the image of the object detected in the previous field and stored in the second memory 210. Thereafter, the tracking operation circuit 209 stores the moving amount of the image of the object detected in the current field into the second memory 210 for the operation in the next field, and reads a content in the first memory 207.

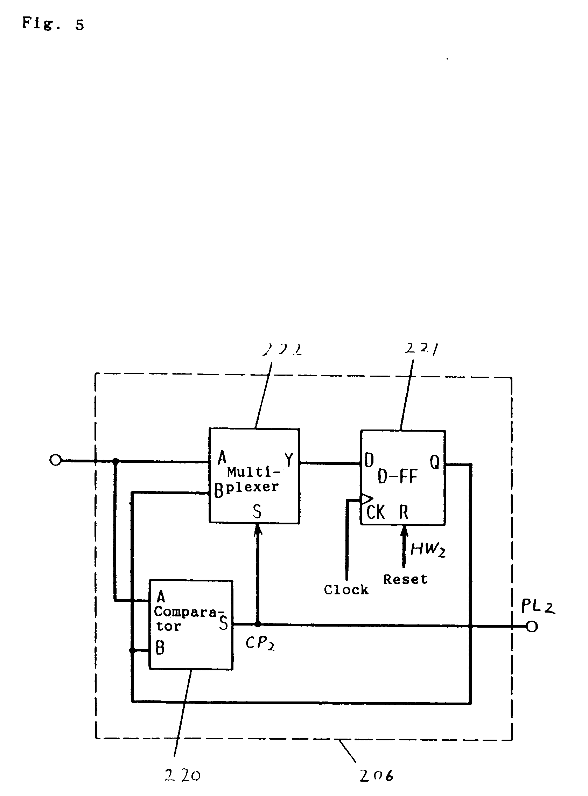

The peak detection circuit 206 detects a maximum value of the luminance signal Y2, and may have, as an example, an internal structure as shown in Fig. 5. A comparator 220 compares an input signal of the peak detection circuit and an output signal of a D-flip-flop (D-FF) 221, and outputs an output signal CP2 indicating the comparison result. A multiplexer 222 is responsive to the output signal CP2 of the comparator 220 for outputting a greater one of the input signal of the peak detection circuit and the output signal of the D-FF 221. The output signal of the multiplexer 222 becomes an input signal of the D-FF 221, and the output of the D-FF 221 is renewed to a maximum value in response to the next clock. This maximum value detection is carried out during a time period from a reset timing of the D-FF 221 to the next reset timing of the D-FF 221. Here, since the reset is performed by the frequency divided signal HW2 obtained by frequency dividing the horizontal synchronizing signal, a maximum value is obtained at intervals of plural scanning lines (intervals of at least two scanning lines). The output signal CP2 of the comparator 220 is sent also, as a latch pulse PL2, to the first memory 207, so that the first memory 207 stores therein, as a peak position, a count value of the horizontal address counter 208 at the time when the maximum value of the high frequency component is obtained.

By detecting the peak position at intervals of at least two scanning lines, as described above, it is possible to reduce the storage capacity of the memory for storing the peak values, and thus possible to reduce the circuit size. When this automatic tracking apparatus is used in a video camera, it is possible to realize a high performance video camera at a low cost.

As described above, according to the present invention, a moving amount of an object in a tracking area is estimated from interfield differences of the tracking signals detected on a plurality of scanning lines selected at intervals of at least two scanning lines(i.e., a plurality of scanning lines each adjacent two of which are separated from each other so as to have at least one other scanning line intervened therebetween), and the tracking area is moved to follow the movement of the object. Accordingly, a highly accurate and highly stable automatic tracking apparatus can be realized. Also, a quick response and stable automatic focus adjusting apparatus can be realized by employing therein the automatic tracking apparatus of the present invention. Further, a video camera which can take a high quality image can be realized by employing therein the automatic tracking apparatus and the automatic focus adjusting apparatus according to the present invention.

## Claims

1. An automatic tracking apparatus comprising:
an image taking lens for forming an image of an object;
an image pickup element for converting the image formed by the image taking lens to an electrical signal;
a signal processing circuit for processing the electrical signal output from the image pickup element to obtain a video signal;
a tracking signal detecting means for detecting a tracking signal representing a feature of the image of the object from a scanning line of the video signal within a predetermined tracking area, and for detecting a movement of the image of the object from a movement of a position of the tracking signal, wherein said tracking signal detecting means detects at least two tracking signals from at least two scanning lines, respectively, in each field of the video signal, and detects the movement of the image of the object from interfields movements of positions of said at least two tracking signals in the respective at least two scanning lines; and
a tracking control part responsive to the detected movement of the image of the object for changing a position of the tracking area.

2. An apparatus according to claim 1, wherein said at least two scanning lines are separated from each other so as to have at least one other scanning line intervened therebetween.

3. An apparatus according to claim 1, wherein said tracking signal detecting means detects as said tracking signal a peak value of a high frequency component of the video signal on a scanning line within the tracking area.

4. An apparatus according to claim 1, wherein said tracking signal detecting means detects the movement of the image of the object from only interfields movements of positions of at least two tracking signals whose interfield moving amounts are within a predetermined range.

5. An apparatus according to claim 4, wherein said tracking signal detecting means calculates an average value of the interfields movements of positions of said at least two tracking signals whose interfield moving amounts are within the predetermined range to obtain the movement of the image of the object.

6. An apparatus according to claim 1, wherein said tracking signal detecting means calculates an average value of the interfields movements of positions of said at least two tracking signals to obtain the movement of the image of the object.

7. An automatic focus adjusting apparatus comprising:
an image taking lens for forming an image of an object, said image taking lens including therein a focus adjusting lens movable to change a focusing state of the image;
an image pickup element for converting the image formed by the image taking lens to an electrical signal;
a signal processing circuit for processing the electrical signal output from the image pickup element to obtain a video signal;
a focus detecting means for detecting a focusing state of the image of the object from the video signal within a predetermined tracking area and for producing a focus signal indicative of the detected focusing state;
a focus control means responsive to the focus signal for driving said focus adjusting lens to control the focusing state of the image of the object within.said tracking area;
a tracking signal detecting means for detecting a tracking signal representing a feature of the image of the object from a scanning line of the video signal within said predetermined tracking area, and for detecting a movement of the image of the object from a movement of a position of the tracking signal, wherein said tracking signal detecting means detects at least two tracking signals from at least two scanning lines, respectively, in each field of the video signal, and detects the movement of the image of the object from interfields movements of positions of said at least two tracking signals in the respective at least two scanning lines; and
a tracking control part responsive to the detected movement of the image of the object for changing a position of the tracking area.

8. An apparatus according to claim 7, wherein said at least two scanning lines are separated from each other so as to have at least one other scanning line intervened therebetween.

9. An apparatus according to claim 7, wherein said tracking signal detecting means detects as said tracking signal a peak value of a high frequency component of the video signal on a scanning line within the tracking area.

10. An apparatus according to claim 7, wherein said tracking signal detecting means detects the movement of the image of the object from only interfields movements of positions of at least two tracking signals whose interfield moving amounts are within a predetermined range.

11. An apparatus according to claim 10, wherein said tracking signal detecting means calculates an average value of the interfields movements of positions of said at least two tracking signals whose interfield moving amounts are within the predetermined range to obtain the movement of the image of the object.

12. An apparatus according to claim 7, wherein said tracking signal detecting means calculates an average value of the interfields movements of positions of said at least two tracking signals to obtain the movement of the image of the object.
